# EUROPEAN PATENT APPLICATION

(11) **EP 4 458 154 A1**
(43) Date of publication of application: **06.11.2024**
(21) Application number: 24170829.6
(22) Date of filing: 17.04.2024
(51) Int. Cl.: A21C 3/08

(54) **DEVICE FOR TWIS..NG A DOUGH PIECE**

(30) Priority: 05.05.2023 NL 2034768
(71) Applicant: Radie B.V., 4104 BC Culemborg (NL)
(72) Inventor: van Blokland, Johannes, Josephus, Antonius, Culemborg (NL)
(74) Representative: IP Maison

(57) **Abstract**

The invention proposes a device for twisting a dough piece, in particular a dough slice or dough strand, comprising a conveyor, with a conveying plane, adapted for carrying the dough piece on the conveying plane during use; and for conveying the dough piece in a direction of conveyance, a friction device, with a friction plane facing the conveying plane at a distance therefrom extending substantially parallel thereto, adapted to exert during use a friction on a dough piece conveyed by the conveyor on a side of the dough piece remote from the side carried by the conveyor wherein at least the conveyor or the friction device comprises a number of endless belts or strings arranged parallel to each other and to the direction of conveyance for forming the conveying plane or the friction plane, and each of the conveyor belts has an individually controllable speed.

## Description

The present invention relates to a device for twisting a dough piece, in particular for forming a so called Wurzelbrot, also referred to as Schraubenbrot, Pagnol, twisted Ciabatta, root bread or Swiss twisted bread. In the process of making these types of bread, a dough piece, in particular an elongate dough piece, is twisted in its length direction prior to baking. Due to the stress provided in the thus obtained twisted dough piece, it may at least partially unroll during baking, which provides a characteristic shape of the final dough product.

Although Wurzelbrot is originally made by hand, various automated solutions for twisting dough pieces have been proposed. Examples are described in European Patent publications EP 2666361 A2 and EP 1384408 A1. These devices allow a dough piece to be twisted with a rotational angle that is linear over the length of the dough piece. In other words, the gradient of twisting is constant.

In practice however, it has appeared that this leads to uncontrolled unrolling during proofing and baking and unpredictable end results after baking, due to the fact that the dough of the dough pieces before twisting is normally not completely homogeneous. This may in particular be the case for a thickness of a dough sheet which may vary in the width direction of the sheet, but it is not limited thereto. A further disadvantage is that the winding direction cannot be altered, and furthermore not be set specific per product. An additional disadvantage of the prior art is that the known devices are each limited to handling specific shapes of dough piece. A more generally applicable device is desirable.

It is therefore a goal of the present invention to provide a device for twisting dough that takes away these disadvantages of the prior art. The invention thereto proposes a device for twisting a dough piece, in particular a dough slice or dough strand, comprising a conveyor, with a conveying plane, adapted for carrying the dough piece on the conveying plane during use; and for conveying the dough piece in a direction of conveyance, a friction device, with a friction plane facing the conveying plane at a distance therefrom extending substantially parallel thereto, adapted to exert during use a friction on a dough piece conveyed by the conveyor on a side of the dough piece remote from the side carried by the conveyor wherein at least the conveyor or the friction device comprises a number of endless belts or strings arranged parallel to each other and to the direction of conveyance for forming the conveying plane or the friction plane, and each of the conveyor belts has an individually controllable speed.

In the context of this invention, a plane is not limited to a closed surface, but it is a mathematical plane in which the endless belts or strings at least partly extend. At least partly is stated here because an endless belt of string always follows a forward and a return path, and only one of these needs to be in the same plane as the corresponding path of the other endless belts or strings. By having conveyor belts with an individually controllable speed, it becomes possible to divert from twisting with a rotational angle that is linear over the length of the dough piece and to differentiate over the length of the dough piece. In other words, the gradient of twisting can be a non-linear function of the length of the dough piece. The length of the dough piece herein extends in a direction perpendicular to the direction of conveyance, on the conveying plane. A further advantage of the device according to the invention is that the direction of twisting can be chosen per dough piece. This is not possible with the devices according to the invention. As a result the device according to the invention not only allows dough pieces with specific shapes, such as rod- or sheet shapes, but also allows to treat inhomogeneous dough pieces with a specific position-dependent rolling pattern. It even becomes possible with the invention to control the twisting in such way that a homogeneously formed dough piece becomes inhomogeneous, in an intended and controlled manner.

Prior to twisting, the dough piece may be formed out of a flat dough piece, for instance formed by sheeting dough and subsequent cutting thereof. A sheet with a thickness of for instance between 20 and 40 mm may be used as a basis. Such sheet may be cut into pieces which extend in a distance of 20 to 50 mm in the direction of conveyance, and have a length which is the width of the original dough sheet. This width may be between 20 and 40 centimetre. Typically the dough piece to be twisted may have the shape of a strip, with a height of 25mm, a width of 50 mm (which extends in the direction of conveyance and this the length direction of the conveyor) and a length of 30 centimetre (which extends in the width direction of the conveyor, and thus in a direction perpendicular to the direction of conveyance). It has appeared that a dough piece of such dimensions allows itself to be twisted by the device according to the invention. The distance between the friction plane and the conveying plane is chosen to correspond or be a number of millimetres smaller than the thickness of the dough piece to be twisted, and in particular may be adjustable and changeable, which may even be during use, by changing the position of a wheel or roller or pulley of the endless belts or strings in a direction perpendicular to the conveying plane during use.

Alternatively, the device according to the invention may be used to roll a dough sheet into an essentially rod shaped device prior to twisting. That means the (relative mutual) speed of the strings or belts may be adjusted during rolling. Means for curling up the dough sheet may be added or even be formed by a preceding rolling mat, arranged above the conveyor.

In order to allow individual adjustment of the speeds of each of the endless belts or strings, the endless belts or strings are provided with their own controllable drive device, such as a controllable motor, and device according to the invention comprises a control device for the controllable drive devices. Such control device may be a common control device for multiple controllable motors.

The control device is arranged for, during operation, allowing these speeds to differ on the conveying plane in a non-linear dependence of a width direction transverse to the direction of conveyance, for the purpose of a non-linear distribution of the torsional twisting of the dough piece over the width of said dough piece. The controller may be configured to allow the speeds and their mutual differences to be individually changed during rolling.

In a preferred embodiment, both the conveyor and the friction device comprise a number of endless belts or strings arranged parallel to each other and parallel to the direction of conveyance. The dough piece is then led in between both sets of endless belts or strings, and the sets of endless belts or strings may be driven with a mutual speed difference. The difference makes the dough piece rotate, and if the various strings from the conveyor or the friction device have different speeds, the dough piece is twisted. A common speed component between the conveyor and the friction device endless belts or strings will feed the dough piece through the twister device. This preferred embodiment has the additional advantage that the direction in which the twisted dough piece extends on the conveyor can be controlled. With state of the art devices, this direction changes during the twisting, that is, dough pieces being delivered perpendicular to the direction of conveyance end up diagonally, or the other way round. With the invention any possible output orientation is possible, regardless of the input orientation. In particular perpendicular to the direction of conveyance both as input and output orientation.

The endless belts or strings of the friction device may be adapted to exert a friction force opposite to the direction of conveyance. This leads to twisting of the dough piece. This opposite force is to be seen relative to the moving dough piece and/or the friction force (or speed) of the conveyor endless belts or strings. The resultant speeds of the conveyor endless belts or strings of the conveyor and the friction device together lead to the movement and the twisting of the dough piece.

The control device may further be adapted to control the belts of the conveyor and/or the friction device in such a way that a dough product retains its orientation relative to the direction of conveyance during its transit.

The twisting device according to the invention may further comprise a sensor device or camera device placed upstream of the friction device in the conveying direction, for determining the thickness of the dough slice as a function of the width direction transverse to the conveying direction, wherein the control device is arranged for controlling the endless belts or strings in dependence on the measured thickness.

The thickness of the dough may not be uniform in the length direction of the dough pieces, perpendicular to the direction of conveyance. Especially at the ends, it may be thinner. This may require a different torsion speed at the outermost endless belts or strings.

In a further embodiment, the number of endless belts or strings arranged parallel to each other and to the direction of conveyance follow a track wherein a driven wheel, roller or pulley is comprised that is arranged further from the conveyance plane than wheels, rollers or pulleys that lead the endless belts or strings along the conveying plane.

In yet a further embodiment the driven wheel or driven roller or driven pulley corresponding to different endless belts or strings are arranged at mutual distances in the direction of conveyance.

The invention will now be elucidated with respect to the following figures, wherein:
Figure 1 shows a cross section of a device according to the present invention; and
Figure 2 shows a perspective system overview of a system according to the invention.

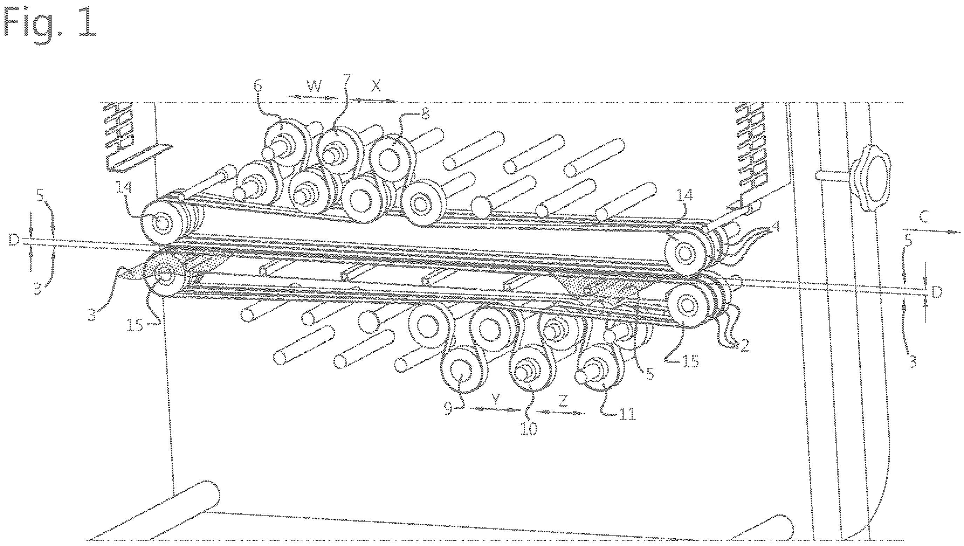

Figure 1 shows a cross section of a device 1 for twisting a dough piece, in particular a dough slice or dough strand (not depicted), comprising a conveyor 2, with a conveying plane 3, adapted for carrying the dough piece on the conveying plane 3 during use; and for conveying the dough piece in a direction of conveyance c, a friction device 4, with a friction plane 5 directed towards the conveying plane 3; and at a distance D therefrom extending substantially parallel thereto, adapted to exert during use a friction on a dough piece conveyed by the conveyor on a side of the dough piece remote from the side carried by the conveyor; wherein at least the conveyor or the friction device comprises a number of endless belts 2, 4 or strings arranged at least partly parallel to each other and to the direction of conveyance C forming the conveying plane 3 or the friction plane 5, wherein each of the conveyor belts has an individually controllable speed. Each of the endless belts or strings 2, 4 is provided with its own driven wheel, roller or pulley 6-11, coupled to a controllable drive device (not depicted), such as a controllable motor, and a control device (not depicted) for individually driving the endless belts or strings. In the case shown, both the conveyor and the friction device comprise a number of endless belts 2, 4 or strings arranged parallel to each other and parallel to the direction of conveyance C. The endless belts or strings 4 of the friction device are adapted to exert a friction force opposite to the direction of conveyance C.

The endless belts or strings arranged parallel to each other and to the direction of conveyance follow a track wherein a driven wheel, roller or pulley 6-11 is comprised that is arranged further from the conveying plane 3 than wheels, rollers or pulleys 14, 15 that lead the endless belts or strings along the conveying plane. Furthermore, the driven wheels or driven rollers or driven pulleys 6-11 corresponding to different endless belts or strings are arranged at mutual distances W, X, Y, Z in the direction of conveyance, in order to allow placement of driving motors and/or gears next to each other and above / below / beside the conveying plane. This allows a construction of the device wherein these motors and/or gears leave space for reaching the strings and keeping a view and track of the dough pieces, and being easily reachable for their own maintenance.

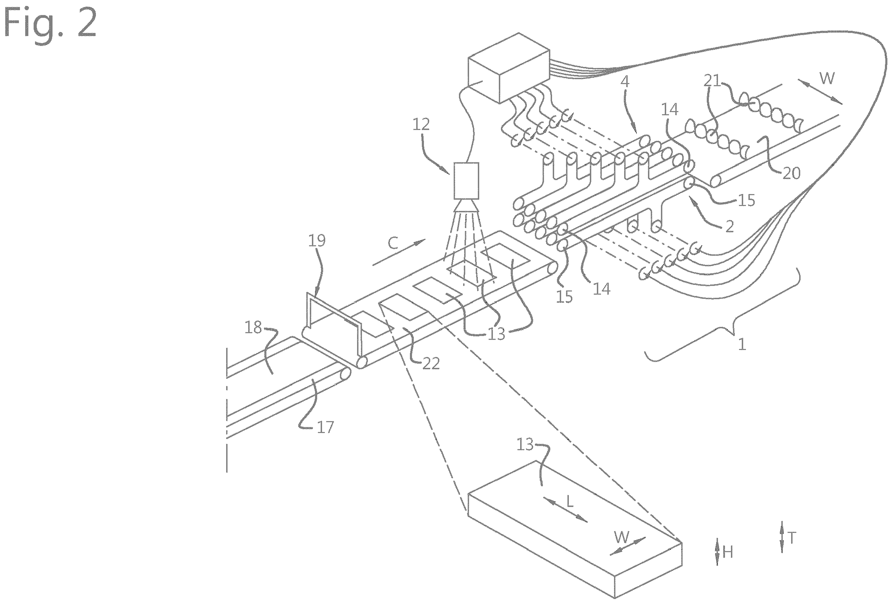

Figure 2 shows a schematic perspective view of a system according to the invention, comprising a sensor device or camera 12 device placed upstream of the friction device in the conveying direction, for determining the thickness T of the dough slice 13 as a function of the width direction W transverse to the conveying direction C, wherein the control device 16 is arranged for controlling the endless belts or strings in dependence on the measured thickness.

Figure 2 further shows a first conveyor belt for delivering a dough sheet 18, which it transferred to a second conveyor belt 22, wherein the first and the second conveyor belts are separated by a cutter 19 for cutting the dough sheet into separate dough pieces 22. The second conveyor belt has a higher speed than the first conveyor belt to separate the pieces. Downstream the twisting device 1 a third conveyor belt 20 for transporting the twisted dough pieces 21 is arranged.

## Claims

1. Device for twisting a dough piece, in particular a dough slice or dough strand, comprising:
- A conveyor,
∘ with a conveying plane,
∘ Adapted for carrying the dough piece on the conveying plane during use; and
∘ for conveying the dough piece in a direction of conveyance;
- A friction device,
∘ with a friction plane directed towards the conveying plane; and
∘ at a distance therefrom extending substantially parallel thereto,
∘ adapted to exert during use a friction on a dough piece conveyed by the conveyor
▪ on a side of the dough piece remote from the side carried by the conveyor;
wherein
- at least the conveyor or the friction device comprises a number of endless belts or strings arranged at least partly parallel to each other and to the direction of conveyance forming the conveying plane or the friction plane,
- each of the conveyor belts has an individually controllable speed; wherein
- each of the endless belts or strings is provided with its own controllable drive device, such as a controllable motor, and a control device for the controllable drive devices;
**characterised in that**
- the control device is arranged for, during operation, enabling these speeds to differ on the conveying plane in an adjustable non-linear dependence of a width direction transverse to the direction of conveyance, for the purpose of an adjustable non-linear distribution of the torsional twisting of the dough piece over the width of said dough piece.

2. Device according to claim 1, wherein both the conveyor and the friction device comprise a number of endless belts or strings arranged parallel to each other and parallel to the direction of conveyance.

3. Device according to claim 2, wherein the endless belts or belts of the friction device are adapted to exert a friction force opposite to the direction of conveyance.

4. Device according to claim 3, wherein the control device is adapted to control the belts of the conveyor and/or the friction device in such a way that a dough product retains its orientation relative to the direction of conveyance during its transit.

5. Device according to any of the preceding claims, comprising a sensor device or camera device placed upstream of the friction device in the conveying direction, for determining the thickness of the dough slice as a function of the width direction transverse to the conveying direction, wherein the control device is arranged for controlling the endless belts or strings in dependence on the measured thickness.

6. Device according to any of the preceding claims, wherein the number of endless belts or strings arranged parallel to each other and to the direction of conveyance follow a track wherein a driven wheel, roller or pulley is comprised that is arranged further from the conveying plane than wheels, rollers or pulleys that lead the endless belts or strings along the conveying plane.

7. Device according to claim 6, wherein the driven wheel or driven roller or driven pulley corresponding to different endless belts or strings are arranged at mutual distances in the direction of conveyance.

8. Combination of a device for twisting dough pieces according to any of claims 1-7, and at least one conveyor belt for delivering dough pieces, in particular provided with a cutter for cutting the dough pieces from a dough sheet and in particular with means for separating the dough pieces, such as a second conveyor belt, and a device for transporting the twisted dough pieces such as a third conveyor belt.
